# EUROPÄISCHE PATENTSCHRIFT

(11) **EP 1 486 137 B1**
(45) Veröffentlichungstag und Bekanntmachung des Hinweises auf die Patenterteilung: **20.10.2010**
(21) Anmeldenummer: 04013674.9
(22) Anmeldetag: 09.06.2004
(51) Int. Cl.: A46B 9/04

(54) **Bürste, insbesondere Zahnbürste und Verfahren zu deren Herstellung**
Brush, in particular a toothbrush and method of manufacturing the same
Brosse , notamment brosse à dents et son procédé de fabrication

(30) Priorität: 10.06.2003 DE 10326155
(43) Veröffentlichungstag der Anmeldung: 15.12.2004
(73) Patentinhaber: M+C Schiffer GmbH, 53577 Neustadt-Wied (DE)
(72) Erfinder: Meyer, Berthold, 53577 Neustadt/Wied (DE)
(74) Vertreter: Grünecker, Kinkeldey, Stockmair & Schwanhäusser Anwaltssozietät

(56) Entgegenhaltungen:
- WO-A-96/02165

## Beschreibung

Die vorliegende Erfindung betrifft eine Bürste, insbesondere Zahnbürste, mit einem Griffstiel und einem Borstenbündel aufweisenden Bürstenkopf sowie einem mit dem Griffstiel verbundenen, sich im Wesentlichen rechtwinklig zu den Borstenbündeln erstreckenden Haltesteg, der eine die Borstenbündel abstützende weichelastische Schicht trägt.

Eine derartige Bürste ist aus der DE 199 37 481 bekannt. Bei dieser vorbekannten Bürste können die Borstenbündel unmittelbar in der weichelastischen Schicht angeordnet sein oder aber in einem darüber liegenden plattenförmigen einheitlichen Bauteil, welches die elastische Schicht oberseitig abdeckt. Das plattenförmige Bauteil erstreckt sich bei der vorbekannten Bürste über die gesamte Abmessung des Bürstenkopfes. Die vorbekannte Bürste weist einen Bürstenkopf auf, dessen Dicke im Wesentlichen der Dicke des Griffstieles entspricht und der ohne Absatz in den Griffstiel übergeht. Der Haltesteg ist mit relativ geringer Stärke ausgebildet und kann somit verschwenken, um die erforderliche Elastizität des Bürstenkopfes bereitzustellen.

Bei der Schwenkbewegung des Haltesteges folgen sämtliche an dem Bürstenkopf befestigten Borstenbündel der Bewegung des Haltesteges, was dazu führt, dass der überwiegende Teil der nutzungsseitigen Enden der Borstenbündel von der zu putzenden Fläche entfernt wird. Insbesondere bei Zahnbürsten muss jedoch darauf geachtet werden, dass die Filamente der Borstenbündel ein gutes Kontaktvermögen aufweisen, d.h. möglichst flächig an der zu putzenden Oberfläche der Zahnbürsten anliegen.

Im Hinblick darauf liegt der vorliegenden Erfindung die Aufgabe zugrunde, eine Bürste, insbesondere Zahnbürste der eingangs genannten Art dahingehend weiter zu bilden, dass die Bürste ein gutes Reinigungsvermögen zeigt, jedoch bei einem hohen Anpressdruck ein Ausweichen der einzelnen Filamente der Borstenbündel erlaubt und im Übrigen eine gute Befestigung der elastisch gehaltenen Teile des Bürstenkopfes ermöglicht. Der vorliegenden Erfindung liegt ferner die Aufgabe zugrunde, ein zur Herstellung der Bürste geeignetes Verfahren anzusetzen.

Zur Lösung des erstgenannten Problems wird mit der vorliegenden Erfindung eine Bürste mit den Merkmalen von Anspruch 1 vorgeschlagen.

Die erfindungsgemäße Bürste weist im Wesentlichen einen Schichtaufbau auf. Hierbei ist die durch die Borstenbündel durchragte Oberfläche von dem oder den Oberflächensegment(en) gebildet. Auf der Rückseite des Oberflächensegmentes befindet sich eine weichelastische Schicht, welche auf der den Borstenträgersegmenten gegenüberliegenden Seite auf den Haltesteg aufgebracht ist. Dieser wiederum ist mit dem Griffstiel verbunden, wobei diese Verbindung entweder einstückig und relativ starr oder aber unter Zwischenlage eines Gelenkes in einem zwischen dem Griffstiel und dem Bürstenkopf angeordneten Halsbereich ausgeführt sein kann. Die Borstenträgersegmente befinden sich bei der erfindungsgemäßen Bürste auf der Oberseite des Bürstenkopfes und tragen die Borstenbündel, d.h. die von den Borstenbündeln durchragte Oberfläche des Bürstenkopfes wird durch die Borstenträgersegmente gebildet.
Bei der erfindungsgemäßen Bürste sind die Borstenträgersegmente durch den Haltesteg hinterlegt, der verhindert, dass die einzelnen Borstensegmente gegeneinander in unzulässiger Weise verschwenken. Die Borstenträgersegmente sind vorzugsweise im Wesentlichen auf einer Ebene gehalten, und zwar auch dann, wenn die Borstenbündel ihre Lage aufgrund einer übermäßigen, gegen die nutzungsseitigen Enden der Borstenbündel wirkenden Anpresskraft verändern. Die Borstenträgersegmente sind inselförmig und mit Abstand zueinander auf der Oberfläche des Bürstenkopfes angeordnet und werden von der elastischen Schicht getragen, vorzugsweise ohne dass sich das Material derselben zwischen die Borstenträgersegmente erstreckt. Aufgrund dieser Ausgestaltung können die Borstenträgersegmente für sich und unabhängig voneinander eine Ausgleichsbewegung durchführen, um die nutzungsseitigen Enden der Borstenbündel flächig an die zu reinigende Oberfläche zu bringen. Bei ansteigender Anpresskraft verschwenken die Borstenträgersegmente ohne dass zunächst der Haltesteg gegenüber dem Griffstiel verschwenkt. Mit anderen Worten führt die Schwenkbewegung des Borstenträgersegmentes lediglich zu einem Abbau von lokalen Spannungsspitzen an den nutzungsseitigen Enden einzelner Borstenfilamente des Bündels bzw. einzelner Borstenbündel bei gleichzeitigem Anlegen der übrigen nutzungsseitigen Enden der Borstenbündel des besagten Borstenträgersegmentes an die zu reinigende Oberfläche. Erst bei einer übermäßigen Anpresskraft, die gegebenenfalls bei Zahnbürsten zu einer Verletzung der Mundschleimhäute führen kann, verschwenkt der Haltesteg zusammen mit den Borstenträgersegmenten. Die Dimensionierung und Ausgestaltung des Haltesteges im Hinblick auf die vorstehend beschriebenen Wirkungen stehen im Belieben des Fachmannes.

Gemäß einer bevorzugten Weiterbildung der vorliegenden Erfindung wird jedoch vorgeschlagen, den Haltesteg derart auszubilden, dass die Grundfläche desselben im Wesentlichen der Grundfläche des Bürstenkopfes entspricht. Wesentlich für die Abstützung der Borstenträgersegmente ist es, dass diese von einem im Wesentlichen vorzugsweise plattenförmigen Haltesteg hinterlegt sind, der wenigstens den überwiegenden Anteil der Grundfläche der Borstenträgersegmente abdeckt. Mit der Weiterbildung nach Anspruch 2 wird eine Bürste mit absatzfreien Seitenflächen geschaffen.

Die gewünschte Elastizität des Haltesteges im Hinblick auf das erforderliche Ausweichen der Filamente bei einem hohen Anpressdruck wird vorzugsweise dadurch erzielt, dass der Haltesteg einstückig als ein gegenüber einem zwischen dem Bürstenkopf und dem Griffstiel befindlichen Bürstenhals in der Dicke vermindertes Bauteil an dem Griffstiel ausgebildet ist.

Eine an dem Übergang zwischen dem Bürstenhals und dem Bürstenkopf absatzfreie Ausgestaltung wird gemäß einer bevorzugten Weiterbildung der vorliegenden Erfindung dadurch geschaffen, dass der Haltesteg zusammen mit der weichelastischen Schicht im Wesentlichen eine der Dicke des Bürstenhalses am Übergang zu dem Bürstenkopf entsprechende Dicke aufweist. Die Dicke des Bürstenkopfes ohne die Borstenträgersegmente entspricht bei dieser bevorzugten Ausgestaltung der Dicke des Bürstenhalses, so dass der Bürstenhals ohne Absatz in den Bürstenkopf übergeht.

Im Hinblick auf das gewünschte Kontaktvermögen wird mit einer weiteren bevorzugten Ausgestaltung der vorliegenden Erfindung vorgeschlagen, dass die Borstenträgersegmente in Längsrichtung der Bürste hintereinander und mit Abstand zueinander angeordnet sind. Dadurch, dass die Borstenträgersegmente mit Abstand zueinander angeordnet sind, können diese auf dem Haltesteg unabhängig voneinander verschwenken, was die flächige Anlage sämtlicher Borstenbündel an der zu reinigenden Oberfläche begünstigt.

Mit Rücksicht auf die hygienischen Anforderungen kann sich das weichelastische Material zwischen die Borstenträgersegmente erstrecken und bündig mit deren Oberfläche enden. Wenngleich hierdurch eine glatte Oberfläche an der Oberseite des Bürstenkopfes gebildet werden kann, ist es bei der erfindungsgemäßen Bürste grundsätzlich zu bevorzugen, die weichelastische Schicht lediglich bis zu der Unterseite der Borstenträgersegmente auszubilden. Die Seitenflächen der Borstenträgersegmente bleiben daher frei, so dass benachbarte Borstenträgersegmente nicht über das Material der weichelastischen Schicht direkt miteinander verbunden sind. Diese Ausgestaltung fördert eine unabhängige Ausgleichsbewegung der einzelnen Borstenträgersegmente zur möglichst flächigen Anlage der Borstenbündel an die zu reinigende Fläche.

Bei dem Schichtaufbau der erfindungsgemäßen Bürste sind vorzugsweise der Haltesteg sowie das Material der weichelastischen Schicht der Grundfläche des Bürstenkopfes einander in der Grundfläche entsprechend ausgestaltet. Jedenfalls abschnittsweise der Grundfläche des Bürstenkopfes entsprechend ausgestaltet sind auch die Borstenträgersegmente. Abschnittsweise in diesem Sinne bedeutet, dass die Borstenträgersegmente in Längsrichtung des Bürstenkopfes und/oder in Querrichtung des Bürstenkopfes hintereinander, jedoch mit Abstand zueinander vorgesehen sein können. Die äußere Stirnseite des in Breitenrichtung jeweils äußeren bzw. vorderen Borstenträgersegmentes verläuft dabei parallel zu der durch den Steg und die weichelastische Schicht gebildeten äußeren Kontur des Bürstenkopfes. Insbesondere sind gemäß einer bevorzugten Ausgestaltung der vorliegenden Erfindung mehrere Borstenträgersegmente in Längsrichtung und/oder in Breitenrichtung des Bürstenkopfes hintereinander, jedoch mit Abstand zueinander vorgesehen. Bei dieser Ausgestaltung verlaufen die sich zwischen den Borstenträgersegmenten ergebenden offenen Nuten parallel bzw. orthogonal zu der Längsrichtung der Bürste. Alternativ ist es auch möglich, die Borstenträgersegmente winklig gegenüber der Längsrichtung der Bürste auszurichten, so dass die sich zwischen den Borstenträgersegmenten ergebenden Nuten schräg zur Längsrichtung der Bürste verlaufen. Sofern es im Hinblick auf das Kontaktvermögen der an den Borstenträgersegmenten befestigten Borstenbündel erforderlich ist, können benachbarte Borstenträgersegmente auch versetzt zueinander angeordnet sein, so dass zwischen benachbarten Borstenträgersegmenten keine den Bürstenkopf durchziehende durchgehende Nuten ausgebildet werden. Die Borstenträgersegmente können in unregelmäßiger Anordnung und mit jeder beliebigen Grundflächengeometrie an dem Bürstenkopf angeordnet werden.

Insbesondere bei einer Ausgestaltung der erfindungsgemäßen Bürste als Zahnbürste, die verhältnismäßig dünn ausgebildet sein soll, besteht der Bürstenkopf im Wesentlichen lediglich aus drei Schichten, wobei die oberste Schicht durch das Borstenträgersegment gebildet wird, die darunter liegende durch die weichelastische Schicht und die wiederum darunter liegende Schicht durch den Haltesteg.

Zur Erhöhung der elastischen Abstützung des oder der Borstenträgersegmente wird gemäß einer weiteren bevorzugten Ausgestaltung der vorliegenden Erfindung vorgeschlagen, dass der Haltesteg wenigstens eine von dem Material der weichelastischen Schicht ausgefüllte, sich bis zu der Unterseite des Bürstenkopfes erstreckende Ausnehmung aufweist. Bei dieser Ausgestaltung wird der Steg teilweise durch das Basismaterial des Stegs und teilweise durch das Material der weichelastischen Schicht gebildet. Die an dem Steg ausgebildete Ausnehmung kann jede beliebige Form aufweisen. Die Ausnehmung kann sich in Längs- oder Querrichtung der Bürste erstrecken. Auch ist es möglich, diagonale Ausnehmungen in Form einer Nut an dem Steg vorzusehen.

Im Hinblick auf eine möglichst elastische Abstützung ist es jedoch zu bevorzugen, die Ausgestaltung derart zu wählen, dass die eine oder mehrere Ausnehmungen durch einen diesen im Wesentlichen rahmenförmig umgebenden Haltesteg eingefasst sind. Bei dieser Ausgestaltung wird vermieden, dass sich Segmente des Haltesteges bei übermäßiger Beanspruchung gegeneinander verschwenken und so die nutzungsseitigen Enden der Borstenbündel von der zu reinigenden Oberfläche entfernen.

Die unabhängige elastische Lagerung der Borstenträgersegmente wird gemäß einer weiteren bevorzugten Ausgestaltung der vorliegenden Erfindung dadurch begünstigt, dass jedem der Borstenträgersegmente eine Ausnehmung zugeordnet ist. Vorzugsweise befindet sich die Ausnehmung auf der Rückseite des Borstenträgersegmentes und weist vorzugsweise eine kleinere Grundfläche als die Grundfläche des zugeordneten Borstenträgersegmentes auf.

Gewünschte Ausgleichsbewegungen der einzelnen Borstenträgersegmente bei einer Verschwenkbewegung zueinander werden vorzugsweise dadurch erzielt, dass eine zentrale, sämtlichen Borstenträgersegmenten zugeordnete Ausnehmung vorgesehen ist.

Es hat sich als vorteilhaft erwiesen, die weichelastische Schicht in an sich bekannter Weise aus einem thermoplastischen Elastomer auszubilden. Die Haftung des thermoplastischen Elastomers gegenüber dem Haltesteg und dem Borstenträgersegment wird dadurch begünstigt, dass diese Bauteile aus Polypropylen gebildet sind. Der Haltesteg und/oder das Borstenträgersegment können jeweils beide oder für sich aus anderen Materialien hergestellt sein. Denkbar sind Polyamide oder andere technische Kunststoffe, die mit dem weichen Elastomer der weichelastischen Schicht haften.

Im Hinblick auf eine gute Anpassung der nutzungsseitigen Enden der Borstenbündel an die zu reinigende Oberfläche wird gemäß einer weiteren bevorzugten Ausgestaltung der vorliegenden Erfindung vorgeschlagen, dass zwischen einem und fünf Borstenbündeln an einem der Borstenträgersegmente angeordnet sind. Vorzugsweise weisen sämtliche Borstenträgersegmente eine derart geringe Anzahl von Borstenbündeln auf, die zusammen mit dem Borstenträgersegment gruppenweise verschwenken und sich an die Kontur der zu reinigenden Oberfläche anpassen.

Zur weiteren Verringerung der Dicke des Bürstenkopfes ist es zu bevorzugen, die Borstenbündel durch eine an dem befestigungsseitigen Enden derselben durch Anschmelzen ausgebildete und in dem Material des Borstenträgersegmentes eingebettete Verdickung an dem Borstenträgersegment zu befestigen. Hierdurch ist es möglich, das Borstenträgersegment mit geringer Stärke und somit auch den Bürstenkopf mit geringer Stärke auszubilden. Alternativ zu dieser ankerlosen Befestigung der Borstenbündel können diese auch konventionell mittels metallischer Stege an dem Borstenträgersegment befestigt sein. Als Befestigung im Sinne der vorliegenden Erfindung ist eine feste Verankerung der Borstenbündel in dem oder den Borstenträgersegmenten zu verstehen. In dem Borstenträgersegment ist also das befestigungsseitige Ende der Borstenbündel eingefasst und seine Beweglichkeit hängt allein von der Beweglichkeit des Borstenträgersegmentes aufgrund der flexiblen Lagerung durch die weichelastische Schicht ab.

Zur Lösung des verfahrensmäßigen Problems wird mit der vorliegenden Erfindung ein Verfahren zur Herstellung einer Bürste, insbesondere Zahnbürste angegeben, bei der ein Griffstiel zusammen mit dem Haltesteg des Bürstenkopfes einerseits und das wenigstens eine Borstenträgersegment andererseits im Wege des Spritzgießens zunächst als separate Bauteile hergestellt und mittels Umspritzen mit einer weichelastischen Masse miteinander verbunden werden. Hierzu werden die separaten Bauteile in eine zweite Spritzgießform umgesetzt, in der der Haltesteg und das bzw. die Borstenträgersegmente sich parallel zueinander erstrecken, jedoch mit Abstand zueinander gehalten werden, um zwischen beiden Bauteilen einen Spalt freizuhalten. In einem zweiten Spritzgusszyklus wird dann weichelastische Masse in den freigehaltenen Spalt eingespritzt, der auf diese Weise mit der weichelastischen Masse ausgefüllt wird. Bei dem erfindungsgemäßen Verfahren werden danach die beiden Bauteile Haltesteg einerseits und Borstenträgersegment andererseits durch Umspritzen dauerhaft, jedoch elastisch zueinander miteinander verbunden.

Weitere Einzelheiten und Vorteile der vorliegenden Erfindung ergeben sich aus der nachfolgenden Beschreibung von zwei Ausführungsbeispielen in Verbindung mit der Zeichnung. In dieser zeigen:
- Figur 1a: eine Draufsicht auf die Unterseite des Bürstenkopfes eines als Zahnbürste ausgebildeten ersten Ausführungsbeispiels;
- Figur 1b: eine Längsschnittansicht des in Figur 1a gezeigten Ausführungsbeispiels;
- Figur 1c: eine Draufsicht auf die Oberseite des in den Figuren 1a und 1b Ausführungsbeispiels;
- Figur 2a: eine Draufsicht auf die Unterseite des Bürstenkopfes eines als Zahnbürste ausgebildeten zweiten Ausführungsbeispiels;
- Figur 2b: eine Längsschnittansicht durch das in das Figur 2a gezeigte Ausführungsbeispiel;
- Figur 2c: eine Draufsicht auf das in den Figuren 2a und 2b gezeigte Ausführungsbeispiel;
- Figur 3a: eine Draufsicht auf die Unterseite des Bürstenkopfes eines als Zahnbürste ausgebildeten dritten Ausführungsbeispiels;
- Figur 3b: eine Längsschnittansicht durch das in das Figur 3a gezeigte Ausführungsbeispiel;
- Figur 3c: eine Draufsicht auf das in den Figuren 3a und 3b gezeigte Ausführungsbeispiel;
- Figur 4: eine Draufsicht auf ein alternatives Ausführungsbeispiel ansonsten unter Beibehaltung des Schichtaufbaus gemäß der in den Figuren 1 bis 3 gezeigten Ausführungsbeispiele;
- Figur 5: eine Längsschnittansicht eines fünften Ausführungsbeispiels; und
- Figur 6: eine Längsschnittansicht eines sechsten Ausführungsbeispiels.

In den Figuren ist der vordere Teil bestehend aus einem Bürstenkopf 2 und einem Bürstenhals 4 einer Zahnbürste gezeigt. An den Bürstenhals 4 schließt sich ein hier nicht dargestellter Griffstiel an.

Bei beiden Ausführungsbeispielen umfasst der Bürstenkopf 2 drei Borstenträgersegmente 6, die jeweils für sich mehrere Borstenbündel 8 tragen. Die Borstenträgersegmente 6 sind auf einer weichelastischen Schicht 10 in Längsrichtung der Bürste hintereinander angeordnet. Die Schicht 10 ist wiederum durch einen Haltesteg 12 hinterlegt. Der Haltesteg 12 ist einteilig an dem Bürstenhals 4 vorgesehen, hat jedoch eine geringere Dicke als der Bürstenhals 4.

Bei dem in den Figuren gezeigten Ausführungsbeispielen entspricht die Dicke der weichelastischen Schicht 10 zusammen mit dem Haltesteg 12 der Dicke des Bürstenhalses 4 am Übergang zu dem Bürstenkopf 2.

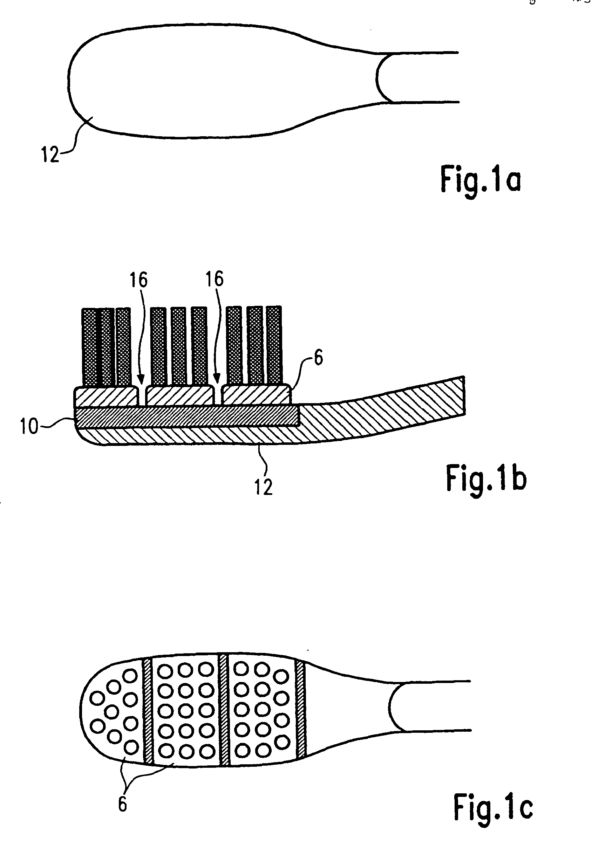

Wie insbesondere den Figuren a und c der jeweiligen Figuren 1-3 zu entnehmen ist, entspricht die Breite der einzelnen Borstenträgersegmente 6 der Breite des Bürstenkopfes 2. In gleicher Breite und der Kontur des Bürstenkopfes 2 folgend, ist die weichelastische Schicht 10 vorgesehen. Darunter befindet sich eine weitere Schicht, die durch den Haltesteg 12 gebildet ist, der ebenfalls der Grundfläche des Bürstenkopfes entspricht.

Bei dem in Figur 1 gezeigten Ausführungsbeispiel ist der Steg 12 stoffidentisch zu dem Bürstenhals 4 ausgebildet, und zwar aus einem Polypropylen. Der Steg 12 einerseits und die weichelastische Schicht 10 andererseits weisen jeweils etwa die Hälfte der Dicke des Bürstenhalses 4 auf, so dass die Gesamtdicke der weichelastischen Schicht 10 und des Steges 12 der Dicke des Bürstenhalses 4 am Übergang zu dem Bürstenkopf 2 entspricht.

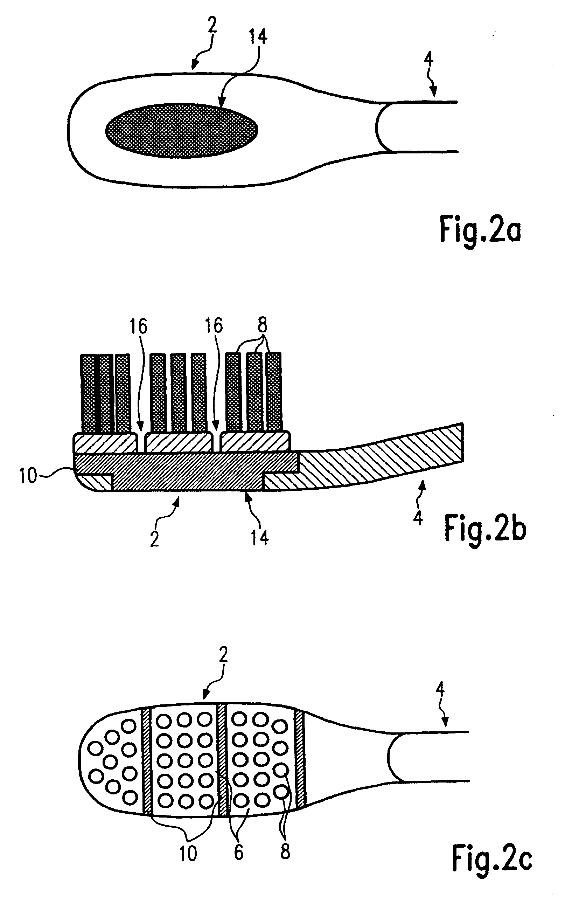

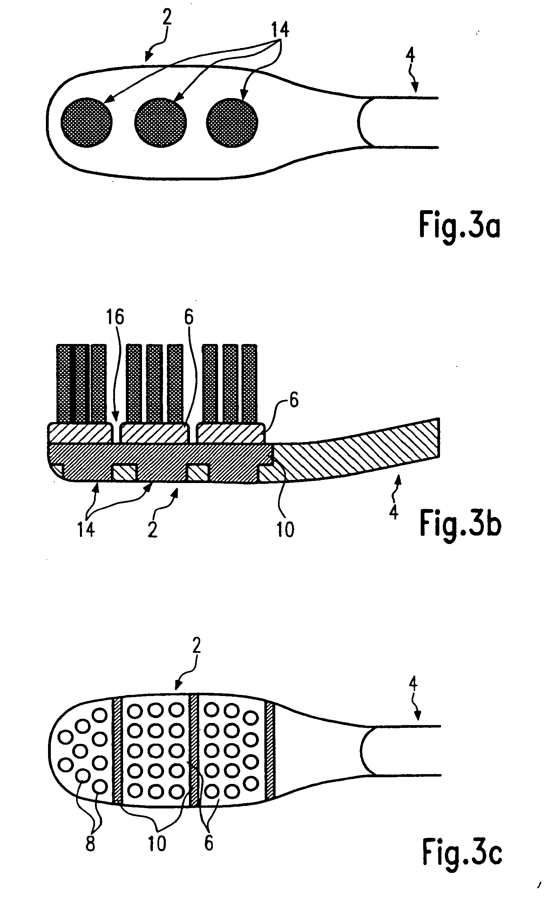

Bei den in den Figuren 2 und 3 gezeigten Ausführungsbeispielen ist der Haltesteg 12 nicht als einheitliches, sondern als Zweikomponentenbauteil ausgebildet. Der Haltesteg 12 umfasst einen äußeren, durch das Material des Bürstenhalses 4 gebildeten Rahmen, welcher im Falle des Ausführungsbeispiels 2a eine, im Falle des Ausführungsbeispiels Figur 3a drei Ausnehmungen 14 umrahmt. Diese Ausnehmungen 14 sind mit dem Material der weichelastischen Schicht 10 ausgefüllt, welches sich bis zu der Unterseite des Bürstenkopfes 2 erstreckt und bündig mit dieser endet.

Bei dem gezeigten Ausführungsbeispiel liegen die Nuten 16 zwischen benachbarten Borstenträgersegmenten 6 frei. Bei einer alternativen, hier nicht gezeigten Ausführungsform können diese Nuten 16 jedoch auch durch das Material der weichelastischen Schicht 10 ausgefüllt sein. Ferner kann der Bürstenhals 4 derart dimensioniert sein, dass die Unterseite des Haltesteges 12 absatzfrei in den Bürstenhals 4 und die Oberseite der Borstenträgersegmente 6 bündig in die Oberseite des Bürstenhalses 4 übergeht.

Eine derartige Ausgestaltung ist mit Rücksicht auf die hygienischen Anforderungen, welche eine Zahnbüste zu erfüllen hat, zu bevorzugen.

Bei dem in den Figuren gezeigten Ausführungsbeispielen weist jedes der Borstenträgersegmente 6 mehrere Borstenbündel auf. So weisen die beiden hinteren Borstenträgersegmente 6 jeweils drei in Längsrichtung der Bürste hintereinander angeordnete Reihen von jeweils fünf Borstenbündeln 8 auf.

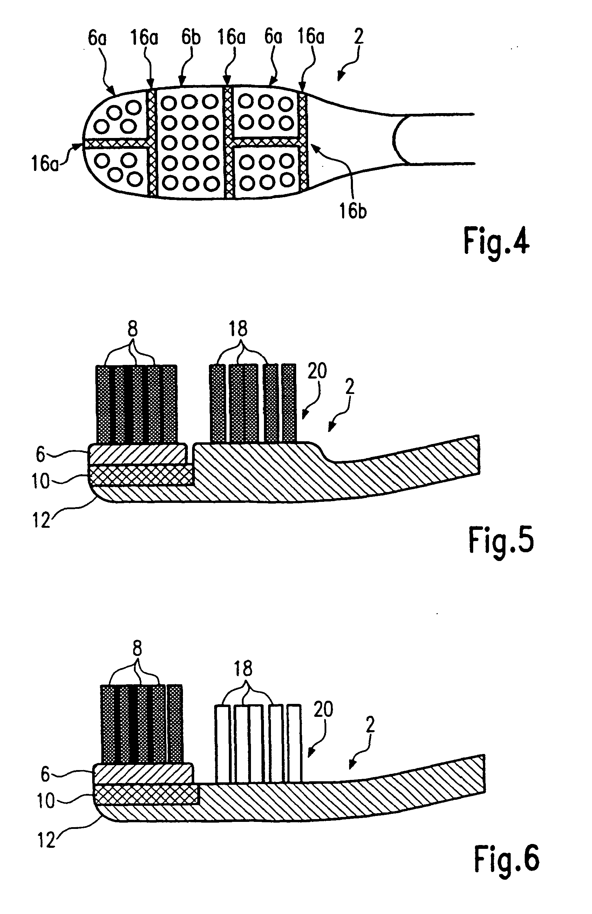

Die in Figur 4 gezeigte Draufsicht auf ein viertes Ausführungsbeispiel der vorliegenden Erfindung hat mehrere, in Längsrichtung der Bürste hintereinander angeordnete Borstenträgersegmente 6a-6c, deren Vorder- und Hinterseiten fluchten, so dass sich zwischen den Borstenträgersegmenten 6a-6c Nuten 16a ergeben, die rechtwinklig zu der Längsrichtung des Bürstenkopfes verlaufen. Die vorderen Borstenträgersegmente 6c und die hinteren Borstenträgersegmente 6a reichen jeweils etwa bis zur Mittellängsachse der Bürste und sparen jeweils zwischen sich eine hintere Längsnut 16b und eine vordere Längsnut 16c aus, die sich parallel zur Mittellängsachse der Bürste erstrecken. Das mittlere Borstenträgersegment 16b reicht durchgängig von einer Seitenfläche des Bürstenkopfes 2 zu der anderen. Die äußeren Seitenflächenabschnitte der Borstenträgersegmente 6a-6c verlaufen entsprechend der Kontur der durch den Haltesteg 12 und die weichelastische Schicht 10 gebildeten Außenfläche des Bürstenkopfes 2.

Die in den Figuren 5 und 6 gezeigten Ausführungsbeispiele weisen Borstenbündel 8 auf, die in der vorstehend genannten Art an einem Borstenträgersegment 6 befestigt sind. Ferner weist diese Zahnbürste Borstenbündel 18 auf, die fest an einem einstückig mit dem Griffstiel ausgebildeten Bereich 20 des Bürstenkopfes 2 befestigt sind. Der Haltesteg 12 und die weichelastische Schicht 10 sowie das Borstenträgersegment 6 schließen sich in Längsrichtung an diesen Bürstenkopfbereich 20 an. Der Haltesteg 12 ist über dem Bürstenkopfbereich 20 mit dem Griffstiel verbunden. Die Dicke des Schichtaufbaus bestehend aus Borstenträgersegment 6, weichelastischer Schicht 10 und Haltesteg 12 ist bei dem in Figur 4 gezeigten Ausführungsbeispiel derart gewählt, dass die Oberseite des Borstenträgersegmentes 6 in der Ebene der Oberfläche des Bürstenkopfbereiches 20 liegt. Die Borstenbündel 8, 18 durchragen dementsprechend die Oberfläche des Bürstenkopfes 2 in einer Ebene.

Bei dem in Figur 6 gezeigten Ausführungsbeispiel weist der Bürstenkopfbereich 20 eine der Dicke des Haltesteges 20 zusammen mit der weichelastischen Schicht 10 entsprechende Dicke auf. Das Borstenträgersegment 6 ist auf die weichelastische Schicht 10 aufgesetzt und überragt die Oberseite des Bürstenkopfbereiches 20. Auch bei diesem Ausführungsbeispiel ist der Haltesteg 12 über dem Bürstenkopfbereich 20 mit dem Griffstiel verbunden.

### Bezugszeichenliste

- 2: Bürstenkopf
- 4: Bürstenhals
- 6: Borstenträgesegment
- 8: Borstenbündel
- 10: weichelastische Schicht
- 12: Haltesteg
- 14: Ausnehmung
- 16: Nuten
- 18: Borstenbündel
- 20: Bürstenkopfbereich

## Patentansprüche

1. Bürste, insbesondere Zahnbürste mit einem Griffstiel und einem Borstenbündel (8) aufweisenden Bürstenkopf (2) sowie einem mit dem Griffstiel verbundenen Haltesteg (12), der eine die Borstenbündel (8) abstützende weichelastische Schicht (10) trägt, **gekennzeichnet durch** mehrere Borstenträgersegmente (6), an denen die Borstenbündel (8) befestigt sind, und die inselförmig mit Abstand zueinander auf der Oberfläche des Bürstenkopfes (2) angeordnet und über die weichelastische Schicht (10) mit dem Haltesteg (12) verbunden sind.

2. Bürste nach Anspruch 1, **dadurch gekennzeichnet, dass** die Grundfläche des Haltesteges (12) im Wesentlichen der Grundfläche des Bürstenkopfes (2) entspricht.

3. Bürste nach einem der vorherigen Ansprüche, **dadurch gekennzeichnet, dass** der Haltesteg (12) einstückig als ein gegenüber einem zwischen dem Bürstenkopf (2) und dem Griffstiel befindlichen Bürstenhals in der Dicke vermindertes Bauteil mit dem Griffstiel ausgebildet ist.

4. Bürste nach einem der vorherigen Ansprüche, **dadurch gekennzeichnet, dass** der Haltesteg (12) zusammen mit der weichelastischen Schicht (10) eine im Wesentlichen der Dicke des Bürstenhalses (4) am Übergang zu dem Bürstenkopf (2) entsprechende Dicke aufweist.

5. Bürste nach einem der vorherigen Ansprüche, **dadurch gekennzeichnet, dass** mehrere Borstenträgersegmente (6) in Längsrichtung und/oder in Breitenrichtung der Bürste hintereinander und mit Abstand zueinander angeordnet sind.

6. Bürste nach einem der vorherigen Ansprüche, **dadurch gekennzeichnet, dass** sich das Material der weichelastischen Schicht (10) bis zu der Unterseite der Borstenträgersegmente (6) erstreckt.

7. Bürste nach einem der vorherigen Ansprüche, **dadurch gekennzeichnet, dass** der Haltesteg (12), das Material der weichelastischen Schicht (10) und abschnittsweise die Borstenträgersegmente (6) der Grundfläche des Bürstenkopfes (2) entsprechend ausgestaltet sind.

8. Bürste nach einem der vorherigen Ansprüche, **dadurch gekennzeichnet, dass** der Bürstenkopf (2) als im Wesentlichen dreischichtiges Bauteil bestehend aus dem Haltesteg (12), der weichelastischen Schicht und dem wenigstens einen Borstenträgersegment (6) ausgebildet ist.

9. Bürste nach einem der vorherigen Ansprüche, **dadurch gekennzeichnet, dass** der Haltesteg (12) wenigstens eine von dem Material der weichelastischen Schicht (10) ausgefüllte, sich bis zu der Unterseite des Bürstenkopfes (2) erstreckende Ausnehmung (14) aufweist.

10. Bürste nach Anspruch 9, **dadurch gekennzeichnet, dass** jedem der Borstenträgersegmente (6) eine Ausnehmung (14) zugeordnet ist.

11. Bürste nach Anspruch 9 oder 10, **dadurch gekennzeichnet, dass** die Grundfläche der Ausnehmung (14) kleiner als die Grundfläche des zugeordneten Borstenträgersegmentes (6) ist.

12. Bürste nach einem der vorherigen Ansprüche, **gekennzeichnet durch** eine zentrale, sämtlichen Borstenträgersegmenten (6) zugeordnete Ausnehmung (14).

13. Bürste nach einem der vorherigen Ansprüche, **dadurch gekennzeichnet, dass** die weichelastische Schicht (10) aus einem thermoplastischen Elastomer gebildet ist.

14. Bürste nach einem der vorherigen Ansprüche, **dadurch gekennzeichnet, dass** der Haltesteg (12) und/oder das wenigstens ein Borstenträgersegment (6) aus Polypropylen gebildet sind.

15. Bürste nach einem der vorherigen Ansprüche, **dadurch gekennzeichnet, dass** wenigstens eines der Borstenträgersegmente (6) zwischen einem und fünf Borstenbündel (8) aufweist.

16. Bürste nach einem der vorherigen Ansprüche, **dadurch gekennzeichnet, dass** die Borstenbündel (8) durch eine an dem befestigungsseitigen Ende derselben durch Anschmelzen ausgebildete und in dem Material des Borstenträgersegmentes eingebettete Verdickung an dem Borstenträgersegment (6) befestigt ist.

17. Verfahren zur Herstellung einer Bürste, insbesondere Zahnbürste nach einem der vorherigen Ansprüche, bei dem der Griffstiel zusammen mit dem Haltesteg (12) des Bürstenkopfes (2) einerseits und das wenigstens eine Borstenträgersegment (6) andererseits im Wege des Spritzgießens als separate Bauteile hergestellt und mittels Umspritzens einer weichelastischen Masse in einen zwischen dem Haltesteg (12) und dem wenigstens einen Borstenträgersegment (6) freigehaltenen Spalte miteinander verbunden werden.

18. Verfahren nach Anspruch 17, **dadurch gekennzeichnet, dass** die Borstenbündel (8) zur Befestigung an dem Borstenträgersegment (6) an ihren befestigungsseitigen Enden angeschmolzen und die derart vorbehandelten befestigungsseitigen Enden der Borstenbündel (8) in eine Spritzgießform für das Borstenträgersegment (6) eingebracht und durch Umspritzen mit dem das Borstenträgersegment (6) bildenden Material in dem Borstenträgersegment (6) eingesiegelt werden.

## Claims

1. Brush, in particular toothbrush, with a grip handle and with a brush head (2) having bristle tufts (8) and also with a holding web (12) which is connected to the grip handle and which carries a soft-elastic layer (10) supporting the bristle tufts (8), **characterized by** a plurality of bristle carrier segments (6), to which the bristle tufts (8) are fastened and which are arranged in the form of an island, at a distance from one another, on the surface of the brush head (2) and are connected to the holding web (12) via the soft-elastic layer (10).

2. Brush according to Claim 1, **characterized in that** the base area of the holding web (12) corresponds substantially to the base area of the brush head (2).

3. Brush according to one of the preceding claims, **characterized in that** the holding web (12) is formed, as a component of reduced thickness with respect to a brush neck located between the brush head (2) and the grip handle, in one piece with the grip handle.

4. Brush according to one of the preceding claims, **characterized in that** the holding web (12), together with the soft-elastic layer (10), has a thickness corresponding substantially to the thickness of the brush neck (4) at the transition to the brush head (2).

5. Brush according to one of the preceding claims, **characterized in that** a plurality of bristle carrier segments (6) are arranged one behind the other and at a distance from one another in the longitudinal direction and/or in the width direction of the brush.

6. Brush according to one of the preceding claims, **characterized in that** the material of the soft-elastic layer (10) extends as far as the underside of the bristle carrier segments (6).

7. Brush according to one of the preceding claims, **characterized in that** the holding web (12), the material of the soft-elastic layer (10) and, in portions, the bristle carrier segments (6) are configured correspondingly to the base area of the brush head (2).

8. Brush according to one of the preceding claims, **characterized in that** the brush head (2) is formed as a substantially three-layered component consisting of the holding web (12), of the soft-elastic layer and of the at least one bristle carrier segment (6).

9. Brush according to one of the preceding claims, **characterized in that** the holding web (12) has at least one recess (14) filled with the material of the soft-elastic layer (10) and extending as far as the underside of the brush head (2).

10. Brush according to Claim 9, **characterized in that** each of the bristle carrier segments (6) is assigned a recess (14).

11. Brush according to Claim 9 or 10, **characterized in that** the base area of the recess (14) is smaller than the base area of the assigned bristle carrier segment (6).

12. Brush according to one of the preceding claims, **characterized by** a central recess (14) assigned to all the bristle carrier segments (6).

13. Brush according to one of the preceding claims, **characterized in that** the soft-elastic layer (10) is formed from a thermoplastic elastomer.

14. Brush according to one of the preceding claims, **characterized in that** the holding web (12) and/or the at least one bristle carrier segment (6) are/is formed from polypropylene.

15. Brush according to one of the preceding claims, **characterized in that** at least one of the bristle carrier segments (6) has between one and five bristle tufts (8).

16. Brush according to one of the preceding claims, **characterized in that** the bristle tufts (8) are fastened to the bristle carrier segment (6) by means of a thickening which is formed by fusion at the fastening-side end of the said bristle tufts (8) and which is embedded in the material of the bristle carrier segment (6).

17. Method for producing a brush, in particular toothbrush, according to one of the preceding claims, in which the grip handle, together with the holding web (12) of the brush head (2), on the one hand, and the at least one bristle carrier segment (6), on the other hand, are produced as separate components by injection moulding and are connected to one another by a soft-elastic mass being injection-moulded around them into a gap kept free between the holding web (12) and the at least one bristle carrier segment (6).

18. Method according to Claim 17, **characterized in that** the bristle tufts (8), in order to be fastened to the bristle carrier segment (6), are fused at their fastening-side ends, and the thus pretreated fastening-side ends of the bristle tufts (8) are introduced into an injection mould for the bristle carrier segment (6) and are sealed in the bristle carrier segment (6) by having, injection-moulded around them, the material which forms the bristle carrier segment (6).

## Revendications

1. Brosse, en particulier brosse à dents comprenant un manche de préhension et une tête de brosse (2) présentant un faisceau de poils de brosserie (8), ainsi qu'une nervure d'arrêt (12) reliée au manche de préhension, qui supporte une couche souple et élastique (10) contre laquelle viennent s'appuyer les faisceaux de poils de brosserie (8), **caractérisée par** plusieurs segments de support de poils de brosserie (6) auxquels sont fixés les faisceaux de poils de brosserie (8), et qui sont disposés en formant des îles écartées les unes des autres sur la surface de la tête de brosse (2) et qui sont reliés via la couche souple et élastique (10) à la nervure d'arrêt (12).

2. Brosse selon la revendication 1, **caractérisée en ce que** la surface de base de la nervure d'arrêt (12) correspond essentiellement à la surface de base de la tête de brosse (2).

3. Brosse selon l'une quelconque des revendications précédentes, **caractérisée en ce que** la nervure d'arrêt (12) est réalisée en une seule pièce avec le manche de préhension sous la forme d'un constituant dont l'épaisseur est réduite par rapport à un collet de brosse se trouvant entre la tête de brosse (2) et le manche de préhension.

4. Brosse selon l'une quelconque des revendications précédentes, **caractérisée en ce que** la nervure d'arrêt (12) présente, conjointement avec la couche souple et élastique (10), une épaisseur correspondant essentiellement à une épaisseur du collet de brosse (4) à la transition avec la tête de brosse (2).

5. Brosse selon l'une quelconque des revendications précédentes, **caractérisée en ce que** plusieurs segments de support de poils de brosserie (6) sont disposés les uns derrière les autres et à l'écart les uns des autres dans la direction longitudinale et/ou sur la largeur de la brosse.

6. Brosse selon l'une quelconque des revendications précédentes, **caractérisée en ce que** la matière de la couche souple et élastique (10) s'étend jusqu'au côté inférieur des segments de support de poils de brosserie (6).

7. Brosse selon l'une quelconque des revendications précédentes, **caractérisée en ce que** la nervure d'arrêt (12), la matière de la couche souple et élastique (10) et, par tronçons, les segments de support des poils de brosserie (6) sont réalisés de manière correspondante à la surface de base de la tête de brosse (2).

8. Brosse selon l'une quelconque des revendications précédentes, **caractérisée en ce que** la tête de brosse (2) est réalisée sous la forme d'un constituant comportant essentiellement trois couches, constitué par la nervure d'arrêt (12), la couche souple et élastique et ledit au moins un segment de support de poils de brosserie (6).

9. Brosse selon l'une quelconque des revendications précédentes, **caractérisée en ce que** la nervure d'arrêt (12) présente au moins un évidement (14) s'étendant jusqu'au côté inférieur de la tête de brosse (2) et rempli avec la matière de la couche souple et élastique (10).

10. Brosse selon la revendication 9, **caractérisée en ce qu'**un évidement (14) est attribué à chacun des segments de support de poils de brosserie (6).

11. Brosse selon la revendication 9 ou 10, **caractérisée en ce que** la surface de base de l'évidement (14) est inférieure à la surface de base du segment de support de poils de brosserie (6) qui lui est attribué.

12. Brosse selon l'une quelconque des revendications précédentes, **caractérisée par** un évidement central (14), attribué à l'ensemble des segments de support de poils de brosserie (6).

13. Brosse selon l'une quelconque des revendications précédentes, **caractérisée en ce que** la couche souple et élastique (10) est formée par un élastomère thermoplastique.

14. Brosse selon l'une quelconque des revendications précédentes, **caractérisée en ce que** la nervure d'arrêt (12) et/ou ledit au moins un segment de support de poils de brosserie (6) sont formés à partir de polypropylène.

15. Brosse selon l'une quelconque des revendications précédentes, **caractérisée en ce qu'**au moins un des segments de support de poils de brosserie (6) présente entre un et cinq faisceaux de poils de brosserie (8).

16. Brosse selon l'une quelconque des revendications précédentes, **caractérisée en ce que** les faisceaux de poils de brosserie (8) sont fixés au segment de support de poils de brosserie (6) à travers un épaississement qui est réalisé par une mise en fusion naissante à l'extrémité dudit faisceau côté fixation et qui est inséré dans la matière du segment de support de poils de brosserie (6).

17. Procédé pour la fabrication d'une brosse, en particulier d'une brosse à dents selon l'une quelconque des revendications précédentes, dans lequel on fabrique le manche de préhension conjointement avec la nervure d'arrêt (12) de la tête de brosse (2) d'une part et ledit au moins un segment de support de poils de brosserie (6) d'autre part par moulage par injection sous la forme d'éléments séparés, et on les relie les uns aux autres au moyen d'une injection périphérique d'une matière souple et élastique dans une fente reste libre entre la nervure d'arrêt (12) et ledit au moins un segment de support de poils de brosserie (6).

18. Procédé selon la revendication 17, **caractérisé en ce qu'**on soumet les faisceaux de poils de brosserie (8) à une mise en fusion naissante à leurs extrémités côté fixation pour la fixation au segment de support de poils de brosserie (6), on introduit les extrémités des faisceaux de poils de brosserie (8) dans un moule de moulage par injection pour le segment de support de poils de brosserie (6) et on les insère à demeure dans le segment de support de poils de brosserie (6) par injection périphérique avec la matière formant le segment de support de poils de brosserie (6).
